# EUROPEAN PATENT SPECIFICATION

(11) **EP 2 236 588 B1**
(45) Date of publication and mention of the grant of the patent: **04.07.2012**
(21) Application number: 09157211.5
(22) Date of filing: 02.04.2009
(51) Int. Cl.: C10L 5/44, C10B 53/02

(54) **Process for use of pyrolysis water**
Verfahren zur Verwendung von Pyrolysewasser
Procédé pour l'utilisation d'eau de pyrolyse

(43) Date of publication of application: 06.10.2010
(73) Proprietor: General Electric Company, Schenectady, NY 12345 (US)
(72) Inventor: Fritz, Jassin, 80997 München (DE)
(74) Representative: Szary, Anne Catherine

(56) References cited:
- EP-A- 1 586 621
- WO-A-97/37944
- WO-A-97/44410
- US-A- 1 550 034
- US-A1- 2007 231 231
- OASMAA A ET AL: "Fast pyrolysis of forestry residue. 1. Effect of extractives on phase separation of pyrolysis liquids" ENERGY & FUELS, THE SOCIETY, WASHINGTON, DC, US, vol. 17, no. 1, 1 January 2003 (2003-01-01), pages 1-12, XP002513659 ISSN: 0887-0624 [retrieved on 2002-11-28]

## Description

### FIELD OF INVENTION

The subject matter disclosed herein relates to a process for use of pyrolysis water, as according to the claims.

### BACKGROUND OF THE INVENTION

The utilization of biomass for power generation or for the generation of a liquid fuel is becoming of increasing interest due to uncertainties in oil and gas supplies, due to an interest in energetic utilization of organic waste, and due to the goal of reducing CO₂ emissions.

Since liquid and gaseous energy sources are often preferred for power generation for technical reasons, in this case biomass needs to be converted before being utilizable in combustion chambers.

As a pretreatment of biomass, pyrolysis can be applied. Pyrolysis is a process for the conversion of organic materials by heating in the absence of oxygen. In particular, flash or fast pyrolysis can be used for pyrolysis of biomass. Flash or fast pyrolysis may comprise rapid heating of biomass particles, and subsequent rapid cooling and depositing of the products.

The products obtained by pyrolysis may be pyrolysis gas, pyrolysis char, and pyrolysis condensate.

Pyrolysis condensate can be gasified in a gasifier. Moreover a bio-slurry can be generated from pyrolysis condensate and pyrolysis char. Said bio-slurry can also be gasified in a gasifier. In a gasifier, gasification is performed. Gasification performed in a gasifier is to be distinguished from combustion performed in a combustion chamber. While combustion is the process of burning fuel with the principal aim of generating power, gasification is a well known process with the principal aim to convert carbonaceous material into a gas mixture typically called syngas. Syngas may include varying amounts of carbon monoxide and hydrogen, and can be used as a fuel. Syngas may further include other gaseous compounds like nitrogen compounds, hydrogen sulfide, etc., depending on the composition of the carbonaceous material used for gasification. Gasification provides syngas which may be used as a combustible material for subsequent combustion in a combustion chamber.

Syngas may be injected into a combustion chamber. By combustion of syngas, power can be generated. Pyrolysis condensate, however, may also directly be injected into a combustion chamber to generate power. However, pyrolysis condensate may have a significantly lower heating value compared to diesel or heavy oil, for example. Moreover the heating value may vary depending on the primary biomass and its water content.

One reason for the lower heating value may be the water content of the pyrolysis condensate. A large water content of the pyrolysis condensate can be undesirable, because it tends to separate from the pyrolysis condensate. This may lead to an inhomogeneous pyrolysis condensate with fractions including only low amounts of combustible compounds.

Although gasifiers such as entrained flow gasifiers are a well proven and reliable technology for gasification of a fuel such as coal, there are several challenges when gasifying pyrolysis condensate or a bio-slurry. For example, safety problems may occur, if a gasifier such as an entrained flow gasifier is fed with pyrolysis condensate obtained by pyrolysis of biomass. Due to the above described tendency of separation, the gasifier may temporarily be fed with pyrolysis condensate with a very high water content. Depending on e.g. the primary biomass employed, said pyrolysis condensate with a very high water content may only have a low content of organic compounds. Accordingly, oxygen present in the gasifier may temporarily not be consumed since temporarily not enough organic material would be available for gasification. These conditions may lead to an excess of oxygen. Such an excess of oxygen, in mixture with syngas of a preceding gasification, may temporarily lead to the risk of an explosion in the gasifier. Since the composition of the pyrolysis condensate, and accordingly the composition of pyrolysis condensate with a high water content, can vary depending on e.g. the primary biomass used, or the storage of the pyrolysis condensate, the explosion risk may not reliably be determined.

In DE 10345672 A1, a process for gasifying pyrolysis condensate is described, wherein pyrolysis condensate is fractionated in a fluid organic phase and a fluid water phase. According to DE 10345672 A1, a risk of explosion may be reduced when a continuous injection of the fluid organic phase into the gasifier is performed. Accordingly, an additional step of separate injection of the remaining fluid water phase into the gasifier is required.

WO97/44410 discloses a process wherein the volatile biomass pyrolysis products are sent directly to a combustion chamber prior to condensation and without separation of pyrolysis water.

When firing a fuel such as syngas or pyrolysis condensate in a combustion chamber, undesired byproducts may be nitrogen oxides (NOₓ). NOₓ may include nitrogen oxides such as nitric oxide (NO) or nitrogen oxide (NO₂). NOx emissions may be reduced by reducing the local flame temperatures. However, special measures are required to reduce the flame temperatures for reducing NOₓ emissions. This becomes especially important for plants with pre-combustion separation of CO₂, since in this case the fuel injected into a combustion chamber of the plant may be almost pure hydrogen. In case of a high hydrogen content of the fuel, gas turbine burners with diffusion combustion are often applied to avoid the risk of flame flashback. In this case, the NOₓ emissions of a syngas fired combustion chamber can be reduced by an addition of diluents, for example nitrogen. Using nitrogen as diluents, however, requires the compression of nitrogen and may lead to increased costs.

### BRIEF DESCRIPTION OF THE INVENTION

In view of the above, a process for use of pyrolysis water according to the first claim is provided. According to this claim, a process for use of pyrolysis water is provided, wherein the process comprises injecting pyrolysis water into a combustion chamber.

Further aspects, advantages and features of the present invention are apparent from the dependent claims, the description and the accompanying drawing.

A full and enabling disclosure of the subject-matter disclosed herein, including the best mode thereof, to one of ordinary skill in the art, is set forth more particularly in the remainder of the specification, including reference to the accompanying figure.

### BRIEF DESCRIPTION OF THE DRAWING

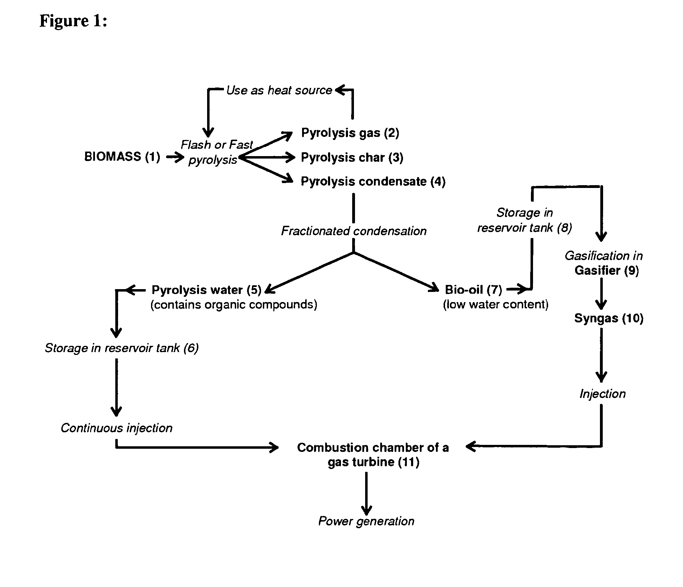

FIG. 1 is a flowchart of one embodiment of the disclosed process.

### DETAILED DESCRIPTION OF THE INVENTION

Reference will now be made in detail to the various embodiments of the subject-matter disclosed herein, one example of which is illustrated in figure 1. Each example is provided by way of explanation of the subject-matter disclosed herein, and is not meant as a limitation of the invention. For example, features illustrated or described as part of one embodiment can be used on or in conjunction with other embodiments to yield yet a further embodiment. It is intended that the present invention includes such modifications and variations.

According to a first aspect, a process for use of pyrolysis water is provided, wherein the process comprises injecting pyrolysis water into a combustion chamber, as according to claim 1.

In yet another aspect, the pyrolysis water is injected continuously or discontinuously into a combustion chamber.

In still another aspect, separating pyrolysis condensate is performed by fractionated condensation of the pyrolysis condensate.

In yet another embodiment, the pyrolysis water is injected into the combustion chamber in liquid phase and/or in vapor phase.

In a further embodiment, the composition and/or the properties of the pyrolysis water and/or the conditions in the combustion chamber are measured before injecting pyrolysis water into the combustion chamber.

In another embodiment, the quantity of pyrolysis water injected into the combustion chamber is regulated, depending on the measured composition of the pyrolysis water and/or on the measured conditions in the combustion chamber.

In still another embodiment, additional water is injected into the combustion chamber, or additional water is added to the pyrolysis water before and/or during injection of the pyrolysis water into the combustion chamber.

In still another embodiment, the process further comprises injecting syngas into a combustion chamber, wherein the syngas originates from gasification of a bio-oil fraction or from gasification by co-feeding a gasifier with a bio-oil fraction and coal, wherein the bio-oil fraction originates from separating pyrolysis condensate originating from pyrolysis of biomass.

In yet another embodiment, the process further comprises injecting syngas into a combustion chamber, wherein the syngas originates from gasification of a bio-slurry, coal slurry or mixtures of both, wherein the bio-slurry comprises pyrolysis char and a bio-oil fraction, wherein the pyrolysis char originates from pyrolysis of biomass, and wherein the bio-oil fraction originates from separating pyrolysis condensate originating from pyrolysis of biomass.

Another aspect of the subject-matter disclosed herein is the use of the disclosed process in an Integrated-Gasification-Combined-Cycle plant, in a Biomass-To-Liquids plant or in a Coal-To-Liquids plant, wherein the combustion chamber is the combustion chamber of said Integrated-Gasification-Combined-Cycle plant, of said Biomass-To-Liquids plant or of said Coal-To-Liquids plant. A further aspect is the use of the disclosed process in an Integrated-Gasification-Combined-Cycle plant that works with or without co-production of liquid fuels, wherein the combustion chamber is the combustion chamber of said Integrated-Gasification-Combined-Cycle plant that works with or without co-production of liquid fuels.

The term biomass as used herein is loosely used to cover many renewable energy sources and may refer to all kinds of biomass such as organic waste of animal or plant origin, or other materials such as wood and tree based materials, forest residues, agricultural residues and energy crops. The wood and tree materials and forest residues may include wood, woodchips, saw dust, bark or other such products from trees, straw, grass, and the like. Agricultural residue and energy crops may further include short rotation herbaceous species, husks such as rice husk, coffee husk, etc., maize, corn stover, oilseeds, residues of oilseed extraction, and the like. The oilseeds may be typical oil bearing seeds like soybean, camolina, canola, rapeseed, corn, cottonseed, sunflower, safflower, olive, peanut, and the like. Organic waste of animal origin may for example include animal fat, manure, meat and bone meal. As further examples plant material such as straw, foliage, and/or hay may be referred to as biomass. Furthermore, used tires and domestic waste, which may be contaminated by paper, board, or plastic material, etc. may be referred to as biomass. Furthermore, material obtained from agro-processing industries such as the oil industry, may be referred to as biomass. Thus, biomass can include a deoiled residue after extraction of oil from the oil seeds. These could be, for example, a deoiled soybean cake, deoiled cottonseed, deoiled peanut cake, and the like. The feedstock can include the gum separated from the vegetable oil preparation process- e.g. lecithin in the case of soybean. Gums are polysaccharides of natural origin, capable of causing a large viscosity increase in solution. Other types of gums, such as agar, dammar gum, Arabic gum, which may not be derived from oils, but directly from plants, may also be used as biomass. The biomass may also include non-seed parts of trees that bear oil - coconut, palm, avocado, and the like. The biomass may include inedible varieties like linseed, castor, and the like. The biomass may also include other tree-based products such as shells, e.g., coconut shell, almond shell, walnut shell, sunflower shell, and the like. Cellulosic fibers like coconut, jute, and the like, may also constitute all or part of biomass. The biomass may also include algae, microalgae, and the like. It could also include agro-products after preliminary processing. As an example, this might include feedstocks such as bagasse (obtained after juice removal from sugarcane), cotton gin trash, and the like. Thus, the biomass as used herein includes materials that are formed as a result of photosynthesis. Thus, although a closed set, biomass involves a number of species. These species differ widely in various constituents, calorific value, physical characteristics and other features. As an illustration, the ash content in rice husk can be about 15-25%, but is only about 2% or less in wood. The moisture content of wood varies from about 10-60%, depending on the source, while the moisture content of groundnut shells is about 2-3%. The calorific value of these biomasses also differs widely - e.g. the heating value of wood varies between about 10-20 MJ/kg, that of rice husk varies between about 13-14 MJ/kg, while that of bagasse is between about 8 -10 MJ/kg. Biomass may be pre-treated by grinding the biomass into fine particles. Moreover, the biomass may be dried before the conversion.

Any kind of pyrolysis process such as flash pyrolysis or fast pyrolysis may be applied in order to treat the biomass. In some embodiments flash pyrolysis may be performed to treat biomass. In some embodiments, fast pyrolysis may be performed to treat biomass. Fast or flash pyrolysis of biomass is a well known technique from the state of the art. The term pyrolysis may refer to the heating of biomass, typically in the absence of any oxygen or in the presence of substoichiometric oxygen. Fast pyrolysis of biomass includes the rapid heating of biomass up to the reaction temperature, typically to between about 400°C and about 600°C and all sub-ranges there between, in some embodiments to between about 450°C to about 550°C, and preferably to about 500°C. By fast or flash pyrolysis of biomass, pyrolysis gas, pyrolysis char and pyrolysis condensate may be obtained. The particular proportion of each of these products can vary significantly since it depends on the composition of the primary biomass as well as on the pyrolysis process. For example, the pyrolysis condensate can be up to about 50 to about 80% by weight of the pyrolysis products and all sub-ranges there between, and the pyrolysis char can be between about 5 and about 30% by weight of the pyrolysis products and all sub-ranges there between. Depending on the primary biomass, for example depending on its humidity, pyrolysis condensate may include a varying amount of water.

The pyrolysis condensate may include a variety of organic compounds with a certain heating value. Such compounds may be for example methanol, pyrolysis lignin, organic acids such as acidic acid, and phenols.

In one embodiment of the process as disclosed herein, the obtained pyrolysis gas may be used as a heat source for the flash or fast pyrolysis itself.

By separating the pyrolysis condensate obtained by pyrolysis of biomass, usually pyrolysis water and a bio-oil fraction are obtained. Hence, the term pyrolysis water as used herein refers to the fraction separated from the pyrolysis condensate. The pyrolysis water may be described as an aqueous solution of oxygen containing organic compounds with a high water content and lower heating value, whereas the bio-oil fraction has a lower water content. Separating may be performed in any way leading to the separation of the pyrolysis water and/or the bio-oil fraction. For example, fractionated condensation may be used for separating the pyrolysis water and/or the bio-oil fraction from the pyrolysis condensate. Separating, for example by fractionated condensation, may be performed in a process attached to the pyrolysis process. Dependent on the composition of the condensate, another alternative to separate the bio-oil fraction and the pyrolysis water from the pyrolysis condensate may be to store the pyrolysis condensate for a sufficiently long period of time to utilize a natural tendency of phase separation. The obtained separated pyrolysis water may be stored separately in a reservoir tank. Also, the obtained bio-oil fraction may be stored in another reservoir tank separate from the reservoir tank of the pyrolysis water. Once the separation of the pyrolysis condensate has been performed, a further tendency of phase separation of the bio-oil fraction during storage time may be avoided.

The obtained bio-oil fraction may include only a low amount of water. Such a low amount may be of from about 1% to about 25% by weight of the bio-oil fraction. In some embodiments the amount of water may be less than about 20% by weight of the bio-oil fraction.

The obtained pyrolysis water may have a high water content. This water content of the pyrolysis water may be more than about 50% by weight of the pyrolysis water. In some embodiments, the water content of the pyrolysis water may be of from about 50% to about 90% by weight of the pyrolysis water.

The separated bio-oil fraction of the pyrolysis condensate has an improved heating value when compared to the water diluted pyrolysis condensate. The heating value of the bio-oil fraction contained in the bio-slurry may for example be of from about 10 MJ/kg to about 30 MJ/kg and all sub-ranges there between e.g. of from about 15 MJ/kg to about 25 MJ/kg. The viscosity of the bio-oil fraction may be varied by preheating the bio-oil fraction to adjust the desired viscosity.

The ash content of the biomass may vary significantly, and biomass may include ashes with high fusion temperatures. Accordingly it may be desired to add e.g. silicon dioxide (SiO₂) to the pretreated biomass to ensure the proper operation of the gasifier. By adding SiO₂, the melting temperature of the slag may be lowered. To adjust the properties of the slag, also limestone can be added. The gasifier may also be co-feeded with pretreated biomass and coal slurry. In order to generate a syngas with a very high quality, a large scale gasifier such as an entrained flow gasifier may be employed.

In one embodiment, the risk of an explosion in a gasifier may be reduced, since the pyrolysis water is injected into a combustion chamber but not as part of the pyrolysis condensate into a gasifier. Thereby, the separated pyrolysis water is injected into the combustion chamber, but the other fraction separated from the pyrolysis condensate, the bio-oil fraction, is not. The bio-oil fraction separated from the pyrolysis condensate may be injected into a gasifier.

However, the pyrolysis water may still include at least one organic compound. In some embodiments, the pyrolysis water may even include organic compounds in an amount of more than about 10% by weight of the pyrolysis water. In some embodiments the pyrolysis water may include organic compounds in an amount of more than about 30% by weight of the pyrolysis water. In some embodiments, the pyrolysis water may include organic compounds in an amount of up to 50% by weight. Hence, disclosed is also a process for power generation, wherein the process comprises injecting pyrolysis water into a combustion chamber. Examples of organic compounds that can be included in the pyrolysis water may be acetic acid, alcohols, and other oxygen containing organic compounds.

Organic compounds included in the pyrolysis water may have a heating value. Accordingly, also the pyrolysis water may have a heating value. The heating value of the pyrolysis water may be of from about 1 MJ/kg to about 20 MJ/kg and all sub-ranges there between. In some embodiments the heating value of the pyrolysis water may be of from about 5 MJ/kg to about 15 MJ/kg. In some embodiments, the heating value of the pyrolysis water may be of from about 7 MJ/kg to about 12 MJ/kg. The composition of the pyrolysis water thereby depends on several factors. The composition and properties of the primary biomass used for pyrolysis may be different. The composition of the pyrolysis condensate that originates from pyrolysis of biomass may also affect the composition of the pyrolysis water that originates from separating the pyrolysis condensate. In addition, a variation in the pyrolysis process and the parameters used for pyrolysis may lead to different compositions of the pyrolysis products obtained, and consequently to a different composition of the pyrolysis water originating from separating pyrolysis condensate. Also the efficiency of the separating technique and the separation process may be different. This may affect the composition of the pyrolysis water as well.

By injecting the pyrolysis water into a combustion chamber, the heating value of organic compounds in the pyrolysis water may be utilized for power generation by combustion of the organic compounds. Before injecting the pyrolysis water into a combustion chamber, the pyrolysis water may be compressed. Injection into a combustion chamber may be performed continuously or discontinuously.

In addition to the opportunity to utilize combustible compounds included in the pyrolysis water, the injection of pyrolysis water into a combustion chamber may further allow the reduction of NOₓ emissions of the combustion process. This may be due to a lowering of the flame temperature in the combustion chamber. In some embodiments, the process disclosed herein may reduce the NOₓ emissions by more than about 20% of the NOₓ emissions generated with pure syngas combustion. In some embodiments, NOₓ emissions may be reduced by more than about 50% of the NOₓ emissions generated with pure syngas combustion. In further embodiments, the NOₓ emissions may be reduced by more than about 70%, or even by more than about 90% of the NOₓ emissions generated with pure syngas combustion. In further embodiments, the NOₓ emissions may be reduced to between about 20% and about 90% of the NOₓ emissions generated with pure syngas combustion. Since reduction of NOₓ emissions may be achieved by injecting pyrolysis water into the combustion chamber, additional measures for the reduction of NOₓ emissions, like injecting nitrogen and the like into the combustion chamber, may become unnecessary in most embodiments, although they may sometimes be utilized. Hence, disclosed herein is also a process for reduction of NOx emissions, wherein the process comprises injecting pyrolysis water into a combustion chamber.

A combustion chamber is the part of an engine in which fuel is burned with the principal aim of generating power. A combustion chamber that may be employed for the process disclosed herein, is the combustion chamber of a gas turbine, e.g. with diffusion combustion, premixed combustion or partially premixed combustion, and/or a combustion chamber of a reciprocating engine.

Combustion chambers are well known from the state of the art, and are to be distinguished from gasifiers in which gasification is performed. Gasification is a well known process with the principal aim to convert carbonaceous material into a gaseous product/gas mixture (Syngas) with a useable heating value. Typical combustible gases in the syngas are CO and H₂. A gasifier in which gasification is performed may further be characterized in that typically more than about 40% by volume of the products obtained by gasification of a carbon containing fuel are carbon monoxide and hydrogen. The Syngas can be burned in a combustion chamber. In contrast to that, the combustion in a combustion chamber aims at the complete combustion with no residual heating value in the flue gas and no remaining combustible gases (e.g. CO and H₂) in the exhaust gas. Combustion chambers may be fed, for example, with carbon containing fuels or pure hydrogen. These fuels are burned in a combustion chamber with the objective of maximum heat release.

In some embodiments, the composition and/or the properties of the pyrolysis water may be measured. In some embodiments, the amount of water and/or the amount of organic compounds in the pyrolysis water may be measured. Measuring of these parameters of the pyrolysis water may be performed with a sensor. This sensor may be installed in a reservoir tank of pyrolysis water. However, this sensor may also be installed at any other site of pyrolysis water transport, storage or use. In some embodiments the conditions in the combustion chamber may be measured. The measured conditions in the combustion chamber may provide information on the temperature in the combustion chamber, the oxygen content in the combustion chamber, the load condition in the combustion chamber, the amount of combustible material in the combustion chamber, and/or the amount of NOₓ emissions of the combustion process. In some embodiments, the conditions of the combustion products may be measured after the combustion process.

Depending on the measured conditions in the combustion chamber, and/or the measured composition of the pyrolysis water, and/or the measured conditions after the combustion process, the quantity of pyrolysis water injected into a combustion chamber may be regulated. For example, in the case where the measured conditions in the combustion chamber provide the information that the temperature in the combustion chamber is too high and/or the amount of NOₓ emissions is too high, the amount of injected pyrolysis water may be increased.

Depending on the measured conditions in the combustion chamber, and/or the measured composition and/or properties of the pyrolysis water, additional water can be mixed with the pyrolysis water. The mixing ratio can be defined with the measured information. For example, in the case where the pyrolysis water includes a high amount of organic compounds, and/or the measured conditions in the combustion chamber provide the information that the temperature in the combustion chamber is too high and/or the amount of NOₓ emissions is too high, the amount of added water can be increased and/or the amount of the injected mixture can be adjusted.

In case of variations in the availability of the pyrolysis water, the injection of additional water or the mixing of the pyrolysis water with additional water can be used for compensation.

Pyrolysis water and/or pyrolysis water with additional water can be injected into the combustion chamber in the liquid phase and/or in vapor phase. In order to vaporize the pyrolysis water and/or the pyrolysis water with additional water, exhaust heat or other waste heat can be used. When exhaust heat or other waste heat is used for the evaporation of the pyrolysis water and/or the pyrolysis water with additional water, the efficiency of a system, which e.g. comprises a gas turbine, can be increased.

The process as disclosed herein may further include injecting additional water into the combustion chamber. For example, in the case where the pyrolysis water includes a high amount of organic compounds having a heating value and/or the measured conditions in the combustion chamber provide the information that a high amount of combustible material is included in the combustion chamber and/or the temperature in the combustion chamber is too high and/or the NOₓ emission in the combustion chamber is too high, additional water may be injected in order to further efficiently reduce NOₓ emissions. The additional water may be injected in liquid phase or in vapor phase.

Before injecting pyrolysis water into a combustion chamber, additional additives may be added to the pyrolysis water. Such additives may be useful to adjust the properties of the pyrolysis water. Addition of additives to the pyrolysis water may be performed in the reservoir tank of the pyrolysis water. For example, water may be added to the pyrolysis water. Addition of water may be useful to further decrease the heating value of the pyrolysis water by diluting the pyrolysis water.

Pyrolysis water may include acidic organic compounds such as acidic acid and the like. Accordingly, it may be desirable to adjust the pH value of the pyrolysis water. For example, adjusting the pH value of the pyrolysis water may be achieved by adding additives. Additional pre-treatment processes may be used for conditioning of the pyrolysis water before the injection into the combustion chamber.

The process as disclosed herein may further include: injecting syngas into a combustion chamber, wherein the syngas originates from gasification of a bio-oil-fraction, a bio-slurry, gasification of coal, or the co-firing of a gasifier with coal and a bio-slurry, wherein the bio-slurry comprises pyrolysis char and a bio-oil fraction, wherein the pyrolysis char originates from pyrolysis of biomass, and wherein the bio-oil fraction originates from separating pyrolysis condensate originating from pyrolysis of biomass.

The process as disclosed herein may be applied in a plant wherein a combustion chamber is employed or in a plant wherein a combustion chamber and a gasifier are employed. Hence, the process as disclosed herein may be applied in a plant wherein one or more combustion chambers are employed, or in a plant wherein one or more combustion chambers and one or more gasifiers are employed. For example, the disclosed process may be used in an Integrated-Gasification-Combined-Cycle plant, a Biomass-to-Liquids plant or in a Coal-To-Liquids plant, which are well known in the art. The process as disclosed herein may be used in an Integrated-Gasification-Combined-Cycle plant that works with or without co-production of liquid fuels.

Another alternative would be to perform parts of some embodiments of the disclosed process at distributed sites. For example the pyrolysis of biomass may be performed at a first site; and separating, gasifying and/or injecting pyrolysis water and/or syngas into a combustion chamber may be performed at another site or other sites. As an exemplary alternative, the pyrolysis of biomass as well as separating the pyrolysis condensate may be performed at a first site; and gasifying and/or injecting of pyrolysis water and/or syngas into a combustion chamber may be performed at another site or other sites.

Such a distribution of parts of some embodiments of the process as disclosed herein may allow a higher efficiency for transportation of the energy sources. For example, pyrolysis of biomass may be performed at a first site; and the pyrolysis condensate may be transported to another site for further processing. Alternatively, pyrolysis of biomass as well as separating the pyrolysis condensate may be performed at a first site; and the pyrolysis water and bio-oil fraction may be transported separately to another site or other sites for further processing or storage. As a further alternative, pyrolysis of biomass, separating of the bio-oil fraction and/or pyrolysis water from the pyrolysis condensate and generating of a bio-mixture of the bio-oil fraction and pyrolysis char may be performed at a first site, and the bio-mixture and the pyrolysis water may be transported to another site or other sites.

Accordingly, the parts of some embodiments of the process as disclosed herein may be set up decentralized or centralized. Some embodiments of the process as disclosed herein may be set up in a single plant or in two or more plants. Decentralizing the treatment of biomass may have advantages for the transport of the biomass and allows different pretreatment for different types of biomass.

In another aspect, a system for use of pyrolysis water is provided which comprises a combustion chamber with separate means configured for injecting pyrolysis water. For example, such means may be an injection valve, or an injection nozzle separate from fuel injection means.

In a further embodiment, a system for use of pyrolysis water may comprise means for evaporating pyrolysis water and/or pyrolysis water with additional water and/or additional water. The heat for evaporating said pyrolysis water and/or said pyrolysis water with additional water and/or said additional water may be exhaust heat or waste heat, e.g. of a gas turbine.

Example 1: Process for use of pyrolysis water obtained by pyrolysis of biomass.

With reference to FIG. 1, biomass (1) is treated by flash or fast pyrolysis in order to obtain pyrolysis gas (2), pyrolysis char (3), and pyrolysis condensate (4). The pyrolysis gas (2) is used as a heat source for the flash or fast pyrolysis. Pyrolysis condensate (4) is treated by fractionated condensation in order to obtain pyrolysis water (5) with a high water content and a content of organic compounds. The pyrolysis condensate is also used to obtain a bio-oil fraction (7), which has a low water content and is stored in a reservoir tank (8). The separated pyrolysis water is also stored separately in a reservoir tank (6) until further use. The bio-oil fraction (7) is gasified in a gasifier (9). Gasification of the bio-oil fraction (7) in a gasifier (9) leads to the production of syngas (10), which is injected into the combustion chamber of a gas turbine (11). Simultaneously, pyrolysis water (5) from the reservoir tank (6) is continuously injected into the combustion chamber of the gas turbine (11) leading to a reduction of the NOₓ emission of the combustion process. Additionally, the heating value of the pyrolysis water (5), enhanced by its content of organic compounds, is utilized. The risk of an explosion during gasification in the gasifier (9) may be reduced, since the pyrolysis water (5) is not part anymore of the pyrolysis condensate used for gasification and is injected into the combustion chamber (11).

This written description uses examples to disclose the invention, including the best mode, and also to enable any person skilled in the art to practice the invention, including performing any incorporated methods. While the invention has been described in terms of various specific embodiments, those skilled in the art will recognize that the invention can be practiced with modification within the scope of the claims. Especially, mutually non-exclusive features of the embodiments described above may be combined with each other. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

## Claims

1. A process for use of pyrolysis water originating from separating pyrolysis water from pyrolysis condensate, wherein the pyrolysis condensate originates from pyrolysis of biomass; wherein the process comprises injecting the pyrolysis water into a combustion chamber of a gas turbine and/or a combustion chamber of a reciprocating engine.

2. The process of claim 1, wherein the pyrolysis water comprises at least one organic compound.

3. The process of any of the preceding claims, wherein the pyrolysis water is injected continuously or discontinuously into the combustion chamber.

4. The process of any of the preceding claims, wherein separating pyrolysis condensate is performed by fractionated condensation of the pyrolysis condensate.

5. The process of any of the preceding claims, wherein the pyrolysis water is injected into the combustion chamber in liquid phase and/or in vapor phase.

6. The process of any of the preceding claims, wherein the composition and/or the properties of the pyrolysis water and/or the conditions in the combustion chamber are measured before injecting pyrolysis water into the combustion chamber.

7. The process of claim 6, wherein the quantity of pyrolysis water injected into the combustion chamber is regulated, depending on the measured composition of the pyrolysis water and/or on the measured conditions in the combustion chamber.

8. The process of any of the preceding claims, further comprising:
injecting syngas into the combustion chamber, wherein the syngas originates from gasification of a bio-oil fraction or from gasification by co-feeding a gasifier with a bio-oil fraction and coal, wherein the bio-oil fraction originates from separating pyrolysis condensate originating from pyrolysis of biomass.

9. The process of the any of the preceding claims further comprising:
injecting syngas into a combustion chamber, wherein the syngas originates from gasification of a bio-slurry, coal slurry or mixtures of both, wherein the bio-slurry comprises pyrolysis char and a bio-oil fraction, wherein the pyrolysis char originates from pyrolysis of biomass, and wherein the bio-oil fraction originates from separating pyrolysis condensate originating from pyrolysis of biomass.

10. Use of the process according to any of the preceding claims in an Integrated-Gasification-Combined-Cycle plant that works with co-production of liquid fuels, in an Integrated-Gasification-Combined-Cycle plant that works without co-production of liquid fuels, in a Biomass-To-Liquids plant or in a Coal-To-Liquids plant, wherein the combustion chamber is the combustion chamber of said Integrated-Gasification-Combined-Cycle plant that works with co-production of liquid fuels, of said Integrated-Gasification-Combined-Cycle plant that works without co-production of liquid fuels, of said Biomass-To-Liquids plant or of said Coal-To-Liquids plant.

## Patentansprüche

1. Verfahren zur Verwendung von Pyrolysewasser, das von der Abtrennung von Pyrolysewasser von Pyrolysekondensat stammt, wobei das Pyrolysekondensat von der Pyrolyse von Biomasse stammt, wobei das Verfahren das Injizieren des Pyrolysewassers in eine Verbrenungskammer einer Gasturbine und/oder eine Verbrennungskammer eines Kolbenmotors umfasst.

2. Verfahren nach Anspruch 1, wobei das Pyrolysewasser mindestens eine organische Verbindung umfasst.

3. Verfahren nach irgendeinem der vorhergehenden Ansprüche, wobei das Pyrolysewasser kontinuierlich oder diskontinuierlich in die Verbrennungskammer injiziert wird.

4. Verfahren nach irgendeinem der vorhergehenden Ansprüche, wobei das Abtrennen des Pyrolysekondensates durch fraktionierte Kondensation des Pyrolysekondensates ausgeführt wird.

5. Verfahren nach irgendeinem der vorhergehenden Ansprüche, wobei das Pyrolysewasser in flüssiger Phase und/oder in Dampfphase in die Verbrennungskammer injiziert wird.

6. Verfahren nach irgendeinem der vorhergehenden Ansprüche, wobei die Zusammensetzung und/oder die Eigenschaften des Pyrolysewassers und/oder die Bedingungen in der Verbrennungskammer gemessen werden, bevor das Pyrolysewasser in die Verbrennungskammer injiziert wird.

7. Verfahren nach Anspruch 6, wobei die Menge des in die Verbrennungskammer injizierten Pyrolysewassers in Abhängigkeit von der gemessenen Zusammensetzung des Pyrolysewassers und/oder den gemessenen Bedingungen in der Verbrennungskammer reguliert wird.

8. Verfahren nach irgendeinem der vorhergehenden Ansprüche, weiter umfassend das Injizieren von Synthesegas in die Verbrennungskammer, wobei das Synthesegas aus der Vergasung einer Bio-Ölfraktion oder einer Vergasung durch gemeinsames Zuführen einer Bio-Ölfraktion und von Kohle zu einem Vergaser stammt, wobei die Bio-Ölfraktion vom Abtrennen des Pyrolysekondensats stammt, das von der Pyrolyse von Biomasse stammt.

9. Verfahren nach irgendeinem der vorhergehenden Ansprüche, weiter umfassend das Injizieren von Synthesegas in eine Verbrennungskammer, wobei das Synthesegas aus der Vergasung einer Bio-Aufschlämmung, Kohle-Aufschlämmung oder Mischungen beider stammt, wobei die Bio-Aufschlämmung Pyrolysekohle und eine Bio-Ölfraktion umfasst, wobei die Pyrolysekohle aus der Pyrolyse von Biomasse und wobei die Bio-Ölfraktion vom Abtrennen des Pyrolysekondensats stammt, das aus der Pyrolyse von Biomasse stammt.

10. Anwendung des Verfahren nach irgendeinem der vorhergehenden Ansprüche in einer integrierten Vergasungs-Anlage mit kombiniertem Zyklus, die mit der Koproduktion flüssiger Brennstoffe arbeitet, in einer integrierten Vergasungs-Anlage mit kombiniertem Zyklus, die ohne Koproduktion flüssiger Brennstoffe arbeitet, in einer Anlage für Biomasse zu Flüssigkeiten oder in einer Anlage für Kohle zu Flüssigkeiten, wobei die Verbrennungskammer die Verbrennungskammer der integrierten Vergasungs-Anlage mit kombiniertem Zyklus, die mit der Koproduktion flüssiger Brennstoffe arbeitet, der integrierten Vergasungs-Anlage mit kombiniertem Zyklus, die ohne Koproduktion flüssiger Brennstoffe arbeitet, der Anlage für Biomasse zu Flüssigkeiten oder der Anlage für Kohle zu Flüssigkeiten ist.

## Revendications

1. Procédé d'utilisation d'eau de pyrolyse du condensat de pyrolyse, selon lequel le condensat de pyrolyse provient de la pyrolyse de biomasse; le procédé comprenant l'injection de l'eau de pyrolyse dans une chambre de combustion d'une turbine à gaz et/ou une chambre de combustion d'un moteur alternatif.

2. Procédé selon la revendication 1, selon lequel l'eau de pyrolyse comporte au moins un composé organique.

3. Procédé selon l'une quelconque des revendications précédentes, selon lequel l'eau de pyrolyse est injectée dans la chambre de combustion de manière continue ou discontinue.

4. Procédé selon l'une quelconque des revendications précédentes, selon lequel la séparation du condensat de pyrolyse est réalisée par condensation fractionnée du condensat de pyrolyse.

5. Procédé selon l'une quelconque des revendications précédentes, selon lequel l'eau de pyrolyse est injectée en phase liquide et/ou en phase vapeur dans la chambre de combustion.

6. Procédé selon l'une quelconque des revendications précédentes, selon lequel la composition et/ou les propriétés de l'eau de pyrolyse et/ou les conditions dans la chambre de combustion sont mesurées avant d'injecter l'eau de pyrolyse dans la chambre de combustion.

7. Procédé selon la revendication 6, selon lequel la quantité d'eau de pyrolyse injectée dans la chambre de combustion est régulée en fonction de la composition mesurée de l'eau de pyrolyse et/ou des conditions mesurées dans la chambre de combustion.

8. Procédé selon l'une quelconque des revendications précédentes, comprenant en outre : l'injection de gaz de synthèse dans la chambre de combustion, le gaz de synthèse provenant de la gazéification d'une fraction bio-huile ou de la gazéification obtenue en alimentant un gazéifieur conjointement avec une fraction bio-huile et du charbon, la fraction bio-huile provenant de la séparation de condensat de pyrolyse émanant de la pyrolyse de biomasse.

9. Procédé selon l'une quelconque des revendications précédentes, comprenant en outre : l'injection de gaz de synthèse dans une chambre de combustion, le gaz de synthèse provenant de la gazéification d'une boue biologique, de bouillie de charbon ou de mélanges des deux, la boue biologique comportant du carbonisat de pyrolyse et une fraction bio-huile, le carbonisat de pyrolyse provenant de la pyrolyse de biomasse, et la fraction bio-huile provenant de la séparation de condensat de pyrolyse émanant de la pyrolyse de biomasse.

10. Utilisation du procédé selon l'une quelconque des revendications précédentes, dans une centrale à cycle combiné à gazéification intégrée, fonctionnant avec la production conjointe de combustibles liquides, dans une centrale à cycle combiné à gazéification intégrée, fonctionnant sans la production conjointe de combustibles liquides, dans une centrale Biomasse-en-Liquides ou dans une centrale Charbon-en-Liquides, la chambre de combustion étant la chambre de combustion de ladite centrale à cycle combiné à gazéification intégrée, fonctionnant avec la production conjointe de combustibles liquides, de ladite centrale à cycle combiné à gazéification intégrée, fonctionnant sans la production conjointe de combustibles liquides, de ladite centrale Biomasse-en-Liquides ou de ladite centrale Charbon-en-Liquides.
